# EUROPÄISCHE PATENTSCHRIFT

(11) **EP 3 395 634 B1**
(45) Veröffentlichungstag und Bekanntmachung des Hinweises auf die Patenterteilung: **05.06.2024**
(21) Anmeldenummer: 18167686.7
(22) Anmeldetag: 17.04.2018
(51) Int. Cl.: B60W 50/00, B60W 40/04, B60W 40/09, G08G 1/16

(54) **VERFAHREN ZUM ERZEUGEN EINES FAHRVERHALTENS BEI AUTONOMEN FAHRZEUGEN**
METHOD FOR GENERATING DRIVING BEHAVIOUR FOR AUTONOMOUS VEHICLES
PROCÉDÉ D'OBTENTION D'UNE SOUPLESSE DE CONDUITE DANS DES VÉHICULES AUTONOMES

(30) Priorität: 26.04.2017 DE 102017004033
(43) Veröffentlichungstag der Anmeldung: 31.10.2018
(73) Patentinhaber: MAN Truck & Bus SE, 80995 München (DE)
(72) Erfinder: Wagner, Philipp, 86316 Friedberg (DE)
(74) Vertreter: v. Bezold & Partner Patentanwälte - PartG mbB

(56) Entgegenhaltungen:
- DE-A1-102009 015 170
- DE-A1-102012 009 890
- DE-T5-112009 004 626

## Beschreibung

Die Erfindung betrifft ein Verfahren zum automatisierten, insbesondere autonomen, Steuern eines Kraftfahrzeugs.

Die EP 0 913 751 A1 offenbart ein autonomes Fahrzeug und ein Verfahren zur Steuerung eines autonomen Fahrzeugs. Das Fahrzeug weist eine Eingabeeinheit für einen oder mehrere Fahraufträge, eine Einrichtung zur Routenplanung, umfassend mindestens eine Positionserkennungseinrichtung und eine digitale Straßenkarte und eine Einrichtung zur Generierung eines Weges auf. Das Fahrzeug weist zudem eine Anordnung von Sensoren, umfassend jeweils mindestens einen Abstandssensor zur Erfassung von Objekten und Beschaffenheitsmerkmalen des Weges, eine Kollisionsvermeidungseinrichtung, eine Einrichtung zur Zustandsdatenerkennung des Fahrzeuges, eine Fahrzeugkontrolleinrichtung und eine Einrichtung zur Steuerung der Fahrzeugaktorik in Abhängigkeit von der Fahrzeugkontrolleinrichtung erzeugter Signale auf.

Die DE 39 12 353 A1 offenbart ein selbststeuerndes Fahrzeug und ein Verfahren zum Betrieb desselben. Das selbststeuernde Fahrzeug weist eine Einrichtung zur Speicherung von Informationen über mehrere vorgegebene Fahrbahnabschnitte, die zusammen die Fahrstrecke für das Fahrzeug bilden, und eine Einrichtung zur Bestimmung der Form jedes Fahrbahnabschnitts anhand der gespeicherten Informationen auf. Das selbststeuernde Fahrzeug weist zudem eine Einrichtung zur Vorgabe eines Soll-Fahrzustands des Fahrzeugs für jeden Fahrbahnabschnitt, auf der Grundlage der ermittelten Form dieses Fahrbahnabschnitts, und eine Einrichtung zur Steuerung des Fahrzeugs entsprechend dem vorgegebenen Soll-Fahrzustand auf.

Die DE 10 2012 009 890 A1 betrifft ein Verfahren und eine Vorrichtung zur Anpassung eines für ein Abstandsregelsystem eines Fahrzeugs geltenden momentanen Soll-Abstandes zu einem in gleicher Fahrspur voraus fahrenden ersten Fahrzeug.

Die DE 10 2009 015 170 A1 betrifft ein Verfahren und eine Vorrichtung zur Steuerung und/oder Regelung einer eigenen Fahrgeschwindigkeit eines Fahrzeugs, wobei die eigene Fahrgeschwindigkeit in Abhängigkeit von wenigstens hinter dem Fahrzeug und/oder auf einer parallel verlaufenden Fahrspur detektierten Fremdfahrzeugen gesteuert und/oder geregelt wird.

Die Fahrweise von autonomen Kraftfahrzeugen kann von Benutzern von autonomen Kraftfahrzeuge aber auch von anderen Verkehrsteilnehmern als für einen Menschen wenig nachvollziehbar oder roboterhaft wahrgenommen werden. Dies kann einerseits zu einer verringerten Akzeptanz gegenüber autonomen Kraftfahrzeugen führen. Andererseits kann dies auch zu kritischen, für einen Menschen unerwarteten Verkehrssituationen führen, insbesondere wenn autonome Kraftfahrzeuge und nicht-autonome Kraftfahrzeuge in einer gemeinsamen Verkehrssituation aufeinandertreffen.

Der Erfindung liegt somit die Aufgabe zu Grunde, ein verbessertes Verfahren zum automatisierten Fahren eines Kraftfahrzeugs vorzusehen. Der Erfindung liegt insbesondere die Aufgabe zu Grunde, ein Fahrverhalten von autonomen oder automatisierten Kraftfahrzeugen so anzupassen, dass das Fahrverhalten von Fahrern, Passagieren und auch anderen Verkehrsteilnehmern als angenehm, rücksichtsvoll, souverän und/oder weniger roboterhaft empfunden wird.

Die Aufgaben werden gelöst durch ein Verfahren zum automatisierten, insbesondere autonomen, Fahren eines Kraftfahrzeugs, vorzugsweise Nutzfahrzeugs gemäß dem unabhängigen Anspruch 1.

Die Aufgaben werden auch durch ein Kraftfahrzeug gemäß dem unabhängigen Anspruch 12 gelöst. Vorteilhafte Weiterbildungen sind in den abhängigen Ansprüchen und der Beschreibung angegeben.

Das Verfahren weist das Bereitstellen einer oder einer Mehrzahl von Zielgrößen zur Beeinflussung eines Fahrverhaltens des Kraftfahrzeugs auf. Die Zielgrößen weisen einen veränderlichen Pegel auf. Das Verfahren weist zudem das Erfassen einer Umgebung des Kraftfahrzeugs auf. Das Verfahren weist ferner das Erzeugen eines Fahrverhaltens des Kraftfahrzeugs in Abhängigkeit von der erfassten Umgebung des Kraftfahrzeugs und den Pegeln der Zielgrößen auf. Das Verfahren weist auch das Anpassen der Pegel der Zielgrößen in Abhängigkeit vom erzeugten Fahrverhalten des Kraftfahrzeugs auf.

Das Verfahren ermöglicht es, das autonome Fahrverhalten eines Kraftfahrzeugs zu "vermenschlichen". Mit anderen Worten gesagt, können je nach Pegel, d. h. Grad der Zielerfüllung, der Zielgrößen unterschiedliche Fahrmanöver für vergleichbare oder identische Fahrsituationen verwendet werden. Damit kann das Fahrverhalten weniger roboterhaft wahrgenommen werden. Dies kann die Akzeptanz gegenüber dem autonomen oder automatisierten Fahrverhalten verbessern und die Interaktion zwischen autonomen und manuell fahrenden Fahrzeugen positiv beeinflussen.

Die Pegel können beispielsweise durch einen Prozentwert oder eine diskrete Zahl zwischen 0 und 10 usw. dargestellt sein.

Das Fahrverhalten kann insbesondere eine Mehrzahl von Fahrmanövern, wie Beschleunigen, Bremsen, Spurhalten, Spurwechseln, Einfädeln, Einfädeln-Lassen, Geschwindigkeit halten, Überholen, Überholen-Lassen und/oder Vorfahrt gewähren aufweisen.

Das Erfassen der Umgebung des Kraftfahrzeugs weist das Erfassen eines anderen (und vorzugsweise mehrerer anderer) Verkehrsteilnehmers, insbesondere eines anderen Kraftfahrzeugs, auf. Der Schritt des Erzeugens des Fahrverhaltens des Kraftfahrzeugs hängt zusätzlich von dem erfassten anderen Verkehrsteilnehmer, insbesondere einer Trajektorieprognose des anderen Verkehrsteilnehmers, ab. Dies hat den Vorteil, dass insbesondere die Interaktion zwischen dem autonomen Kraftfahrzeug und anderen Verkehrsteilnehmern verbessert werden kann.

Vorteilhafterweise weist das Verfahren das Bestimmen der Trajektorieprognose des anderen Verkehrsteilnehmers basierend auf einer erfassten Bewegung des anderen Verkehrsteilnehmers, erfassten Lichtsignalen des anderen Verkehrsteilnehmers und/oder eines erfassten bevorstehenden Fahrbahnverlaufs auf. Damit kann eine mit hoher Wahrscheinlichkeit eintretende Trajektorieprognose bestimmt werden.

Die auszuführenden Fahrmanöver der Fahrweise können insbesondere so bestimmt werden, dass sich die Pegel nur innerhalb eines gewünschten Bereichs verändern.

Die Zielgrößen weisen auf eine Minimierung von Beschleunigungsvorgängen in Längs- und/oder Querrichtung des Kraftfahrzeugs, eine Minimierung von Spurwechseln, eine Minimierung von Abbremsvorgängen und/oder eine Minimierung von Unterschreitungen von vordefinierten Mindestsicherheitsabständen zu anderen Verkehrsteilnehmern vor, neben und/oder hinter dem Kraftfahrzeug auf. Die Zielgrößen können optional weiterhin eine Minimierung eines Kraftstoffverbrauchs, eine Minimierung einer Fahrdauer und/oder eine Minimierung von Geschwindigkeitsänderungen aufweisen. Die Kombination einiger oder aller dieser Zielgrößen zum Erzeugen eines dynamischen Fahrverhaltens kann zu einer für Menschen nachvollziehbaren Fahrweise des autonomen Kraftfahrzeugs führen.

Vorzugsweise weisen die Zielgrößen miteinander konkurrierende Zielgrößen auf. Eine Erhöhung eines Pegels einer Zielgröße führt zu einer Verringerung eines Pegels einer anderen Zielgröße und umgekehrt. Somit kann aus einer Auswahl von Fahrmanöveralternativen insbesondere diejenige Fahrmanöveralternative ausgesucht werden, die einen guten Kompromiss für die Pegelveränderungen der konkurrierenden Zielgrößen aufweist und zu den aktuellen Pegeln der Zielgrößen passt. Zudem ermöglichen konkurrierende Zielgrößen, dass unterschiedliche Fahrmanöveralternativen für identische Fahrsituationen ausgewählt werden, wenn die Pegel der Zielgrößen unterschiedlich sind.

In einer weiteren Ausführungsform wird das Erzeugen des Fahrverhaltens des Kraftfahrzeugs zum Halten der Pegel der Zielgrößen innerhalb von vorgegebenen Regelbereichen der Zielgrößen durchgeführt. D. h., in einer bestimmten Fahrsituation wird diejenige Fahrmanöveralternative ausgewählt, die die Pegel der betroffenen Zielgrößen (möglichst gut) innerhalb des vorgegebenen Pegelbereichs hält.

Der vorgegebene Pegelbereich kann zwischen einem oberen Pegelschwellwert und einem unteren Pegelschwellwert definiert sein.

In einem Ausführungsbeispiel weist mindestens eine Zielgröße einen unteren Pegelschwellwert auf. Das Erzeugen des Fahrverhaltens des Kraftfahrzeugs wird zum Halten der Pegel der Zielgrößen über dem unteren Pegelschwellwert und/oder zum Erhöhen der Pegel über den unteren Pegelschwellwert durchgeführt. Damit kann verhindert werden, dass eine Zielgröße kaum oder gar nicht erfüllt wird.

Alternativ oder zusätzlich weist mindestens eine Zielgröße einen oberen Pegelschwellwert auf. Das Erzeugen des Fahrverhaltens des Kraftfahrzeugs wird dann zum Halten der Pegel der Zielgrößen unter dem oberen Pegelschwellwert und/oder zum Verringern der Pegel unter den oberen Pegelschwellwert durchgeführt. Dies hat den Vorteil, dass verhindert werden kann, dass eine Zielgröße im Vergleich zu anderen Zielgrößen übererfüllt wird.

In einem weiteren Ausführungsbeispiel sind die Zielgrößen, der vorgegebene Pegelbereich, der untere Pegelschwellwert, der obere Pegelschwellwert, und/oder ein Ausmaß (Grad oder Höhe) einer Veränderung eines Pegels in Abhängigkeit von einer Benutzereingabe einstellbar. Der Benutzer kann insbesondere eine Eingabe über eine Benutzerschnittstelle des Kraftfahrzeugs durchführen. Somit kann das autonome Fahrverhalten individualisiert werden.

Alternativ oder zusätzlich besteht die Möglichkeit, dass der Benutzer insbesondere über eine Benutzerschnittstelle des Kraftfahrzeugs eine Priorisierung der Zielgrößen vornimmt. Damit kann das autonome Fahrverhalten ebenfalls individualisiert werden. Zum Beispiel kann von einem Benutzer viel Wert auf eine kurze Fahrtdauer oder einen geringen Kraftstoffverbrauch gelegt werden. Diese Zielgrößen können dann stärker gewichtet werden, zum Beispiel durch Erhöhen der jeweiligen Pegelschwellwerte. Die Priorisierung kann von dem Benutzer bspw. auch über die Auswahl eines vorbestimmten und/oder veränderlichen Fahrprofils o.ä. erfolgen. Die Fahrprofile können bspw. entsprechend den jeweilig priorisierten Zielgrößen benannt sein, z. B. "Kurze Fahrzeit", "Energiesparend" usw. Dies kann die Priorisierung für den Benutzer vereinfachen.

Das Erzeugen des Fahrverhaltens weist das Bestimmen einer Mehrzahl von Fahrmanöveralternativen in Abhängigkeit der erfassten Umgebung des Kraftfahrzeugs, das Auswählen einer der Fahrmanöveralternativen in Abhängigkeit von den Pegeln der Zielgrößen, und das Durchführen der ausgewählten Fahrmanöveralternative auf.

Das Erzeugen des Fahrverhaltens weist ferner das Bestimmen einer Pegelveränderung für mindestens eine Zielgröße für jede Fahrmanöveralternative auf. Dann wird diejenige Fahrmanöveralternative ausgewählt, bei der die bestimmte Pegelveränderung den Pegel der Zielgröße innerhalb eines vorgegebenen Pegelbereichs hält, zu keiner Unterschreitung eines unteren Pegelschwellwerts führt oder zu keiner Überschreitung eines oberen Pegelschwellwerts führt.

Das Anpassen der Pegel der Zielgrößen weist das Anpassen des Pegels mit der bestimmten Pegelveränderung für die ausgewählte und durchgeführte Fahrmanöveralternative auf. Dies hat den Vorteil, dass die betreffenden Pegel während des Fahrens nach jedem Fahrmanöver entsprechend dem jeweiligen Fahrmanöver aktualisiert werden.

Vorteilhafterweise weisen die Fahrmanöveralternativen das Kolonnefahren mit oder Überholen eines vorausfahrenden anderen Kraftfahrzeugs auf. Alternativ oder zusätzlich weisen die Fahrmanöveralternativen das Einfädeln eines anderen Kraftfahrzeugs vor oder hinter dem Kraftfahrzeug auf. Insbesondere in diesem Fahrsituationen (Kolonnefahren oder Überholen, Einfädeln vor oder hinter dem Kraftfahrzeug) ermöglicht das hierin offenbarte Verfahren eine für Menschen nachvollziehbare Fahrweise des autonomen Kraftfahrzeugs.

In einem Ausführungsbeispiel werden die Pegel der Zielgrößen fortwährend über eine Mehrzahl von Fahrmanövern des Kraftfahrzeugs angepasst. Dies hat den Vorteil, dass dem Verfahren eine Art "Gedächtnis" verliehen werden kann, sodass eine unterschiedliche Handhabung von aufeinanderfolgenden Fahrsituationen ermöglicht wird.

In einer Ausführungsvariante verringern sich die Pegel der Zielgrößen im Zeitablauf (über die Zeit) selbst. D. h., im Verlauf der Zeit können sich die Pegel auch ohne Anpassung aufgrund des erzeugten Fahrverhaltens verringern. Damit können die Auswirkungen vergangener Fahrmanöver und Ereignisse auf das erzeugte Fahrverhalten teilweise abgeschwächt werden.

In einem weiteren Ausführungsbeispiel ist das Erzeugen des Fahrverhaltens von einer Sicherheitseinrichtung zur Kollisionsvermeidung in kritischen Fahrsituationen und/oder zur Einhaltung von Straßenverkehrsregeln jederzeit übersteuerbar. Folglich können die gesetzlichen und sicherheitsrelevanten Randbedingungen einer Fahrstrategie des Fahrzeugs jederzeit gewährleistet werden.

Die Erfindung betrifft ferner ein Kraftfahrzeug, vorzugsweise ein Nutzfahrzeug. Das Kraftfahrzeug weist eine Umgebungserfassungssensorik zur Erfassung einer Umgebung des Kraftfahrzeugs auf. Das Kraftfahrzeug weist zudem eine Steuereinrichtung auf, die zum automatisierten, vorzugsweise autonomen, Fahren des Kraftfahrzeugs und zum Durchführen eines Verfahrens wie hierin offenbart ausgebildet ist.

Der Begriff "Steuereinrichtung" bezieht sich auf eine Steuerelektronik, die je nach Ausbildung Steuerungsaufgaben und/oder Regelungsaufgaben übernehmen kann.

In einer bevorzugten Ausführungsform weist das Kraftfahrzeug zusätzlich eine Sicherheitseinrichtung zur Kollisionsvermeidung mit anderen Verkehrsteilnehmern und/oder zur Einhaltung von Straßenverkehrsregeln auf. Die Sicherheitseinrichtung kann die Steuereinrichtung zum autonomen Fahren jederzeit übersteuern.

In einer vorteilhaften Ausführungsvariante weist das Kraftfahrzeug zusätzlich eine Benutzerschnittstelle für Benutzereingaben auf. Über die Benutzerschnittstelle kann beispielsweise eine Anpassung und/oder Auswahl von Zielgrößen, Pegelschwellwerten usw. einstellbar sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Schemadarstellung eines Systems zum autonomen Fahren eines Kraftfahrzeugs, das ein Fahrverhalten des Kraftfahrzeugs in Abhängigkeit von einer Mehrzahl von Zielgrößen erzeugt; und
- Figur 2: eine beispielhafte Fahrsituation zur Erklärung der Arbeitsweise des Systems zum autonomen Fahren des Kraftfahrzeugs.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

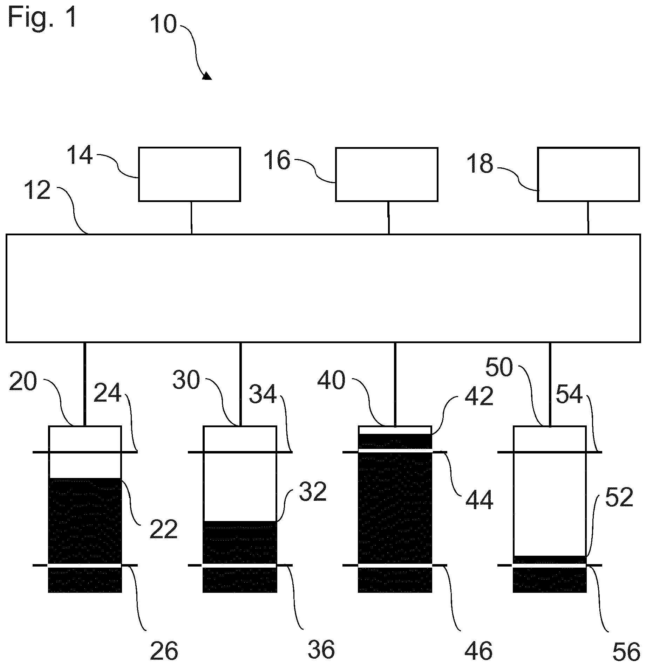

Die Figur 1 zeigt ein System 10 zum autonomen Fahren eines Kraftfahrzeugs. Das System 10 weist eine Steuereinrichtung 12, eine Benutzerschnittstelle 14, eine Umgebungserfassungssensorik 16 und eine Sicherheitseinrichtung 18 auf. Das Kraftfahrzeug kann ein Personenkraftwagen oder ein Nutzfahrzeug, zum Beispiel ein Omnibus oder ein Lastkraftwagen, sein.

Die Steuereinrichtung 12 ist dazu ausgebildet, ein Kraftfahrzeug, insbesondere ein Nutzfahrzeug, wie beispielsweise ein Omnibus oder ein Lastkraftwagen, autonom, d. h. vollautomatisiert, zu steuern.

Zum autonomen Fahren des Kraftfahrzeugs erzeugt die Steuereinrichtung 12 ein Fahrverhalten, mit dem das Kraftfahrzeug gesteuert wird. Der Begriff "Fahrverhalten" kann sich auf verschiedene Aspekte einer Bewegung eines Kraftfahrzeugs beziehen, insbesondere auf eine Längsführung, eine Querführung, eine Geschwindigkeit, eine Beschleunigung und eine Verzögerung des Kraftfahrzeugs.

Das Fahrverhalten wird von der (autonomen) Steuereinrichtung 12 unter Berücksichtigung von mehreren Zielgrößen 20, 30, 40, 50 erzeugt.

Die Zielgrößen 20, 30, 40, 50 weisen einen aktuellen Pegel (aktuelles Level, aktuelles Niveau) 22, 32, 42, 52 auf. Der aktuelle Pegel 22, 32, 42, 52 gibt jeweils den Grad der Zielerfüllung der jeweiligen Zielgröße 20, 30, 40, 50 zu einem bestimmten Zeitpunkt während der Fahrt an. Ein hoher Pegel gibt einen hohen Grad der Zielerfüllung an, während ein niedriger Pegel einen niedrigen Grad der Zielerfüllung angibt. In der dargestellten Ausführungsform ist der aktuelle Pegel 42 der Zielgröße 40, nämlich Minimierung von Beschleunigungsvorgängen in Längsrichtung des Kraftfahrzeugs, vergleichsweise hoch. Dies kann bedeuten, dass vorangegangene Fahrmanöver der erzeugten Fahrweise häufig bei gleichbleibender Geschwindigkeit des Kraftfahrzeugs, d. h. ohne Beschleunigungsvorgänge, ausgeführt wurden. Im Gegensatz dazu ist der Pegel 52 der Zielgröße 50, nämlich Minimierung von Spurwechseln des Kraftfahrzeugs, vergleichsweise niedrig. Dies kann wiederum bedeuten, dass vorangegangene Fahrmanöver der erzeugten Fahrweise häufig Spurwechsel des Kraftfahrzeugs aufwiesen.

Zusätzlich können die Zielgrößen jeweils einen oberen Pegelschwellwert 24, 34, 44, 54 und/oder einen unteren Pegelschwellwert 26, 36, 46, 56 aufweisen. Die oberen Pegelschwellwerte 24, 34, 44, 54 können sich voneinander unterscheiden. Die unteren Pegelschwellwerte 26, 36, 46, 56 können sich ebenfalls voneinander unterscheiden. Grundsätzlich kann die Steuereinrichtung 12 ein Fahrverhalten des Kraftfahrzeugs so erzeugen, dass die aktuellen Pegel 22, 32, 42, 52 der Zielgrößen 20, 30, 40, 50 innerhalb eines Bereichs zwischen den unteren Pegelschwellwerten 26, 36, 46, 56 und dem oberen Pegelschwellwerten 24, 34, 44, 54 gehalten werden. Mit anderen Worten gesagt, werden die auszuführenden Fahrmanöver so bestimmt und ausgewählt, dass sich die aktuellen Pegel 22, 32, 42, 52 nur innerhalb eines gewünschten Bereichs verändern.

Insbesondere können die Fahrmanöver von der Steuereinrichtung 12 so bestimmt und ausgewählt werden, dass der aktuelle Pegel 22, 32, 42, 52 der Zielgrößen 20, 30, 40, 50 über dem unteren Pegelschwellwert 26, 36, 46, 56 gehalten wird. Sollte der aktuelle Pegel 22, 32, 42, 52 einer der Zielgrößen 20, 30, 40, 50 unter dem unteren Pegelschwellwert 26, 36, 46, 56 sein, so wird die Steuereinrichtung 12 das oder die nachfolgenden Fahrmanöver so bestimmen und auswählen, dass der jeweilige aktuelle Pegel 22, 32, 42, 52 über den unteren Pegelschwellwert 26, 36, 46, 56 erhöht wird. Gleichermaßen können Fahrmanöver so bestimmt werden, um den aktuellen Pegel 22, 32, 42, 52 unter dem oberen Pegelschwellwert 24, 34, 44, 54 zu halten oder zurückzuführen.

Die Zielgrößen 20, 30, 40, 50 können (situationsabhängig) zumindest teilweise konkurrierende Zielgrößen sein. Beispielsweise trifft das für die Zielgröße 20, nämlich Minimierung des Kraftstoffverbrauchs, und die Zielgröße 30, nämlich Minimierung einer Fahrtdauer, zu. Typischerweise wird eine Verringerung des Kraftstoffverbrauchs zu einer Verringerung einer Geschwindigkeit und/oder zu einer Verringerung von Beschleunigungsvorgängen führen, was wiederum zu einer Erhöhung der Fahrtdauer führt. D. h., ein ausgewähltes Fahrmanöver kann gleichzeitig den aktuellen Pegel 22 erhöhen und den aktuellen Pegel 32 verringern und umgekehrt. Zusätzlich muss nicht jedes Fahrmanöver alle aktuellen Pegel 22, 32, 42, 52 beeinflussen.

Das System kann einerseits von Herstellerseite aus abgeschlossen sein, sodass keine Veränderungen der Zielgrößen 20, 30, 40, 50 usw. möglich sind. Andererseits ist es auch denkbar, die Zielgrößen 20, 30, 40, 50 von einem Benutzer beispielsweise aus einer Gruppe von Zielgrößen auswählen zu lassen. Der Benutzer kann beispielsweise über eine Benutzerschnittstelle 14 im Kraftfahrzeug eine Auswahl treffen. Zusätzlich besteht die Möglichkeit, dass der Benutzer das System über die Benutzerschnittstelle 14 weiter individualisieren kann. Zum Beispiel könnte ein Benutzer die Zielgrößen 20, 30, 40, 50 nach Priorität ordnen. Die Steuereinrichtung 12 könnte dann basierend auf der Benutzereingabe die oberen Pegelschwellwerte 24, 34, 44, 54 und die unteren Pegelschwellwerte 26, 36, 46, 56 einstellen. Zum Beispiel könnte für die Zielgröße 20, nämlich Minimierung des Kraftstoffverbrauchs, die höchste Priorität vom Benutzer eingestellt werden. Die Steuereinrichtung 12 würde dann beispielsweise einen höheren oberen Pegelschwellwert 24 und einen höheren unteren Pegelschwellwert 26 einstellen. Bei Verringerung einer Priorität würde die Steuereinrichtung 12 einen niedrigeren oberen Pegelschwellwert 24 und einen niedrigeren unteren Pegelschwellwert 26 einstellen. Es ist ebenso denkbar, dass die durch bestimmte Fahrmanöver ausgelöste Pegelveränderung in Abhängigkeit von der Priorisierung durchgeführt wird, sodass die Höhe der Pegelveränderung für das gleiche Fahrmanöver kleiner oder größer sein kann.

Neben der Anpassung der Zielgrößen kann über die Benutzerschnittstelle 14 zusätzlich ein oder mehrere Fahraufträge mit einem gewünschten Ziel eingegeben werden.

Die Umgebungserfassungssensorik 16 ist dazu ausgebildet, eine Umgebung des Kraftfahrzeugs zu erfassen. Insbesondere ist die Umgebungserfassungssensorik zur Erfassung eines Fahrbahnverlaufs und anderer Verkehrsteilnehmer, zum Beispiel anderer Kraftfahrzeuge usw., vorgesehen. Die Umgebungserfassungssensorik 16 kann eine Umgebung vor, neben und hinter dem Kraftfahrzeug erfassen. Die Umgebungserfassungssensorik 16 kann einer Mehrzahl von Erfassungssystemen aufweisen. Zum Beispiel kann die Umgebungserfassungssensorik 16 ein Kamerasystem mit einer oder mehreren Kameras, ein Radarsystem, Ultraschallsensoren, Lasersensoren usw. aufweisen.

Durch Auswertung der Signale von der Umgebungserfassungssensorik 16 kann die Steuereinrichtung 12 eine Trajektorienprognose für andere Verkehrsteilnehmer, insbesondere andere Kraftfahrzeuge, bestimmen. Zum Prognostizieren einer Trajektorie eines anderen Verkehrsteilnehmers kann dessen erfasste Eigenbewegung, erfasste Lichtsignale (zum Beispiel Fahrtrichtungsanzeiger (Blinker)) des anderen Verkehrsteilnehmers und/oder ein bevorstehender Fahrbahnverlauf herangezogen werden. Der bevorstehende Fahrbahnverlauf kann unter Zuhilfenahme der Umgebungserfassungssensorik 16 und/oder einer Standortbestimmungsvorrichtung erfasst werden. Informationen bezüglich der Eigenbewegung, der Fahrtrichtungsänderung, des bevorstehenden Fahrbahnverlaufs und/oder weitere relevante Informationen können bspw. auch über eine sog. "Car-to-X"-Kommunikationsschnittstelle empfangen werden. Eine solche "Car-to-X"-Kommunikationsschnittstelle ermöglicht zum Beispiel eine (automatische) Kommunikation zwischen zwei oder mehr Kraftfahrzeugen zum Austausch von Informationen.

Die Sicherheitseinrichtung 18 kann das von der Steuereinrichtung 12 erzeugte Fahrverhalten jederzeit übersteuern. Die Sicherheitseinrichtung 18 ist dazu ausgebildet, in kritischen Verkehrssituationen die Steuerung über das Kraftfahrzeug zu übernehmen. Beispielsweise kann die Sicherheitseinrichtung 18 eine Notbremsung oder ein Notausweichmanöver zur Verhinderung einer Kollision mit einem anderen Verkehrsteilnehmer einleiten, wenn bspw. vorbestimmte Sicherheitsabstände unterschritten werden. Die Sicherheitseinrichtung 18 kann ferner gewährleisten, dass die Straßenverkehrsregeln (zum Beispiel Vorfahrt gewähren, Ampelsignale, Geschwindigkeitsbegrenzungen) eingehalten werden. Dazu kann die Sicherheitseinrichtung 18 beispielsweise auf Umgebungsdaten zurückgreifen, die von der Umgebungserfassungssensorik 16 erfasst wurden.

Die Steuereinrichtung 12 kann mit weiteren Systemen zum Empfangen und Ausgeben von Signalen verbunden sein. Zum Beispiel kann die Steuereinrichtung 12 mit einer Standortbestimmungsvorrichtung, beispielsweise eine GPS-Vorrichtung, zur Bestimmung des Standorts des Kraftfahrzeugs verbunden sein. Die Steuerungseinrichtung 12 kann ferner mit einer Einrichtung zur Routenplanung, die mit der Standortbestimmungsvorrichtung zusammenarbeitet, verbunden sein. Die Steuereinrichtung 12 kann ferner mit weiteren Aktoren und Sensoren des Kraftfahrzeugs verbunden sein, um ein autonomes Fahren des Kraftfahrzeugs zu ermöglichen.

Die Steuereinrichtung 12 steuert das Kraftfahrzeug zum autonomen Fahren basierend auf der von der Umgebungserfassungssensorik 16 erfassten Umgebung und den Pegeln 22, 32, 42, 52 der Zielgrößen 20, 30, 40, 50.

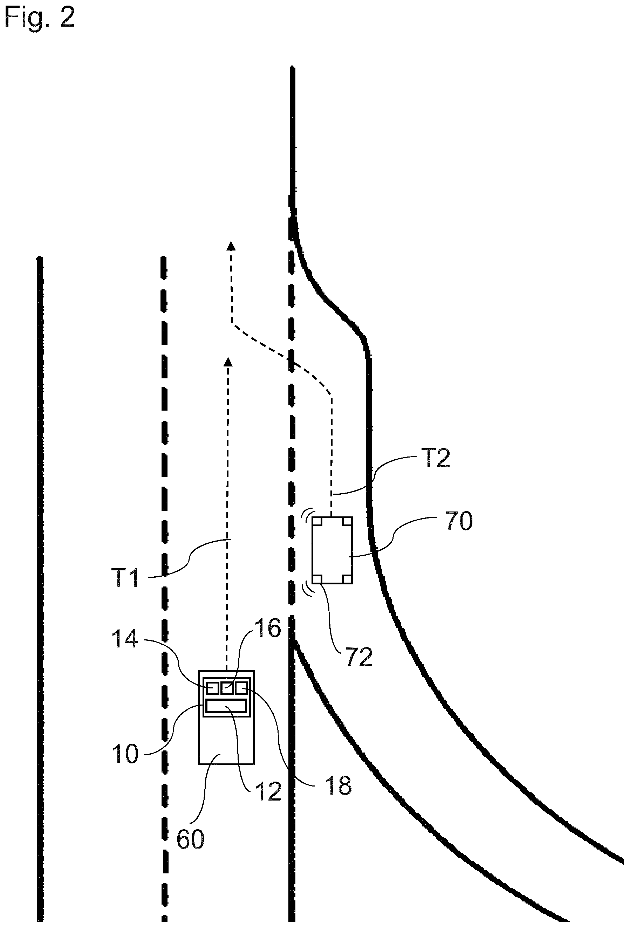

Unter Bezugnahme auf Figur 2 ist ein Beispiel beschrieben, um eine mögliche Anwendung des von der Steuereinrichtung 12 ausgeführten Verfahrens zum autonomen Fahren eines Kraftfahrzeugs aufzuzeigen.

Die Figur 2 zeigt eine Draufsicht auf eine Autobahnauffahrt. Ein Kraftfahrzeug (Ego-Kraftfahrzeug) 60 fährt auf der rechten Spur der Autobahn. Das Kraftfahrzeug 60 ist mit dem System 10 zum autonomen Fahren ausgestattet. Ein anderes Kraftfahrzeug 70 fährt auf einem Beschleunigungsstreifen der Autobahn. Das andere Kraftfahrzeug 70 ist mit Fahrtrichtungsanzeigern 72 ausgestattet. Die Fahrtrichtungsanzeiger 72 sind im Betrieb, d. h. blinken, um anzuzeigen, dass das Kraftfahrzeug 70 auf die rechte Spur der Autobahn wechseln möchte.

Die Umgebungserfassungssensorik 16 des Kraftfahrzeugs 60 erfasst das andere Kraftfahrzeug 70. Basierend auf den Lichtsignalen der Fahrtrichtungsanzeiger 72 und der Eigenbewegung des Kraftfahrzeugs 70 kann die Steuereinrichtung 12 des Systems 10 eine Trajektorieprognose T2 für das weitere Kraftfahrzeug 70 ermitteln.

Die Steuereinrichtung 12 bestimmt weiterhin, dass sich bei Beibehaltung der momentanen Fahrweise des Kraftfahrzeugs 60 eine Trajektorieprognose T1 das Kraftfahrzeug 60 der Trajektorieprognose T2 des anderen Kraftfahrzeugs 70 nähert oder mit dieser überschneidet. Die Steuereinrichtung 12 steht somit prinzipiell vor der Wahl, das andere Kraftfahrzeug 70 vor oder nach dem Kraftfahrzeug 60 einfädeln zu lassen. Die Steuereinrichtung 12 muss also entscheiden, ob dem anderen Kraftfahrzeug 70 das Einfädeln vor dem Kraftfahrzeug 60 durch Geschwindigkeitsreduktion oder leichtes Bremsen ermöglicht wird oder ob ein Vorbeifahren gegebenenfalls mit einer Beschleunigung an dem anderen Kraftfahrzeug 70 sinnvoller ist. Somit kann, auch wenn bspw. die Straßenverkehrsordnung eines Landes vorsieht, dass das Kraftfahrzeug 70 in jedem Fall Vorfahrt gewähren muss, der Einfädelvorgang im Sinne einer rücksichtsvollen Fahrweise für beide Beteiligte vereinfacht werden (siehe bspw. deutsche Straßenverkehrsordnung § 1 (1) StVO).

Basierend auf den Trajektorieprognosen T1 und T2 sowie einem als frei erkannten Bereich vor dem Kraftfahrzeug 60 kann die Steuereinrichtung 12 bestimmen, in welchem Maß der Einfädelvorgang des anderen Kraftfahrzeugs 70 gemäß der Trajektorieprognose T2 eine Änderung des Fahrzustands des Kraftfahrzeugs 60 erfordert. Würden durch den Einfädelvorgang vor dem Kraftfahrzeug 60 die Pegel 22, 32, 42, 52 der Zielgrößen 20, 30, 40, 50 nicht unter die unteren Pegelschwellwerte 26, 36, 46, 56 gesenkt (siehe Figur 1), so wird ein Einfädeln vor dem Kraftfahrzeug 60 durch eine angepasste Geschwindigkeit des Kraftfahrzeugs 60 ermöglicht. Andernfalls kann beispielsweise die Geschwindigkeit des Kraftfahrzeugs 60 leicht erhöht werden, um ein Einfädeln hinter dem Kraftfahrzeug 60 zu erleichtern. Die Pegel 22, 32, 42, 52 werden entsprechend dem gewählten und ausgeführten Fahrmanöver (Einfädeln vor oder hinter dem Kraftfahrzeug 60) aktualisiert.

In diesem Beispiel können die Zielgrößen beispielsweise eine minimale Fahrzeit über die gesamte Fahrstrecke sein. Eine weitere Zielgröße kann eine gleichmäßige Fahrweise ohne extreme Steuereingriffe mit als komfortabel empfundenen Sicherheitsabständen über die gesamte Fahrstrecke sein.

Ist der aktuelle Pegel der minimalen Fahrzeit bereits nahe am unteren Pegelschwellwert und der aktuelle Pegel einer gleichmäßigen Fahrweise deutlich über dem unteren Pegelschwellwert, so wird die Steuereinrichtung 12 ein Einfädeln nach dem Kraftfahrzeug 60 ermöglichen. Die Steuereinrichtung 12 erhöht die Geschwindigkeit des Kraftfahrzeugs 60 dazu ein wenig, um ein Einfädeln hinter dem Kraftfahrzeug 60 zu erleichtern. Dieses Fahrmanöver erhöht den Pegel der minimalen Fahrzeit, da sich die Fahrzeit aufgrund der erhöhten Geschwindigkeit verringert. Gleichzeitig verringert sich der Pegel der gleichmäßigen Fahrweise, da ein Beschleunigungsvorgang durchgeführt wird.

Zu einem späteren Zeitpunkt kann beispielsweise eine ähnliche Situation wie in Figur 2 dargestellt nochmals auftreten. Der aktuelle Pegel der minimalen Fahrzeit kann mittlerweile durch eines oder mehrere vorherige Fahrmanöver deutlich über dem unteren Pegelschwellwert liegen, wohingegen der aktuelle Pegel für die gleichmäßige Fahrweise nahe dem unteren Pegelschwellwert liegt. Hier kann die Steuereinrichtung 12 beispielsweise ein Einfädeln des anderen Kraftfahrzeugs 70 vor dem Kraftfahrzeug 60 ermöglichen. Hierbei kann beispielsweise eine Geschwindigkeit des Kraftfahrzeugs 60 gehalten werden. Dieses Fahrmanöver hat keinen Einfluss auf den aktuellen Pegel der minimalen Fahrzeit und erhöht den aktuellen Pegel der gleichmäßigen Fahrweise, da die Geschwindigkeit des Kraftfahrzeugs 60 nicht verändert wird.

Das System 10 ermöglicht somit unterschiedliche Fahrmanöver für identische oder vergleichbare Situationen in Abhängigkeit der Pegel 22, 32, 42, 52 der Zielgrößen 20, 30, 40, 50.

Halten mehrere Fahrmanöveralternativen alle Pegel 22, 32, 42, 52 innerhalb des gewünschten Bereichs, kann bspw. diejenige Fahrmanöveralternative ausgewählt werden, die die Pegel 22, 32, 42, 52 insgesamt am positivsten oder am wenigsten negativ beeinflusst und/oder die ggf. den Pegel der Zielgröße mit der höchsten Priorität positiv beeinflusst.

Weicht das andere Kraftfahrzeug 70 beispielsweise durch ein plötzliches Wechseln auf die rechte Fahrspur der Autobahn von der Trajektorieprognose T2 ab, so kann die Sicherheitseinrichtung 18 die Steuereinrichtung 12 übersteuern und ein sofortiges Notbremsmanöver oder ein Notausweichmanöver einleiten.

Die Steuereinrichtung 12 kann selbstverständlich auch für andere Fahrmanöver und Alternativen von Fahrmanövern ein Fahrverhalten des Kraftfahrzeugs 60 in Abhängigkeit von der erfassten Umgebung und den Pegeln 22, 32, 42, 52 der Zielgrößen 20, 30, 40, 50 erzeugen. Zum Beispiel kann die Steuereinrichtung 12 zwischen einem Überholen und einem Kolonnefahren (Nicht-Überholen) mit einem anderen Kraftfahrzeug entscheiden.

Auch wenn hierin die besonders bevorzugte Ausführungsform eines autonomen (vollautomatisierten) Kraftfahrzeugs beschrieben ist, so werden Fachleute erkennen, dass die hierin beschriebenen Prinzipien auch auf Teilautomatisierung zum Steuern von Kraftfahrzeugen anwendbar sind. Beispielsweise können ein Geschwindigkeitstempomat oder ein Abstandsregeltempomat verbessert werden. Das jeweilige Automatisierungssystem kann so angepasst werden, dass es einen entsprechenden Teilaspekt (Geschwindigkeit halten, Abstand halten) eines Fahrverhaltens des Kraftfahrzeugs in Abhängigkeit von den Pegeln der Zielgrößen anpasst und die Pegel wie hierin offenbart ständig aktualisiert.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 10: System zum autonomen Fahren eines Kraftfahrzeugs
- 12: Steuereinrichtung
- 14: Benutzerschnittstelle
- 16: Umgebungserfassungssensorik
- 18: Sicherheitseinrichtung
- 20: Zielgröße "Minimierung des Kraftstoffverbrauchs"
- 22: (Aktueller) Pegel
- 24: Oberer Pegelschwellwert
- 26: Unterer Pegelschwellwert
- 30: Zielgröße "Minimierung der Fahrdauer"
- 32: (Aktueller) Pegel
- 34: Oberer Pegelschwellwert
- 36: Unterer Pegelschwellwert
- 40: Zielgröße "Minimierung von Beschleunigungsvorgängen in Längsrichtung"
- 42: (Aktueller) Pegel
- 44: Oberer Pegelschwellwert
- 46: Unterer Pegelschwellwert
- 50: Zielgröße "Minimierung von Spurwechseln"
- 52: (Aktueller) Pegel
- 54: Oberer Pegelschwellwert
- 56: Unterer Pegelschwellwert
- 60: Kraftfahrzeug (Ego-Kraftfahrzeug)
- 70: Anderes Kraftfahrzeug
- 72: Fahrtrichtungsanzeiger
- T1: Trajektorieprognose des Kraftfahrzeugs 60
- T2: Trajektorieprognose des Kraftfahrzeugs 70

## Patentansprüche

1. Verfahren zum automatisierten, insbesondere autonomen, Fahren eines Kraftfahrzeugs (60), vorzugsweise Nutzfahrzeugs, aufweisend:
a) Bereitstellen einer oder mehrerer Zielgrößen (20, 30, 40, 50) zur Beeinflussung eines Fahrverhaltens des Kraftfahrzeugs (60), wobei die Zielgrößen (20, 30, 40, 50):
a1) eine Minimierung von Beschleunigungsvorgängen in Längs- und/oder Querrichtung des Kraftfahrzeugs (60) eine Minimierung von Spurwechseln, eine Minimierung von Abbremsvorgängen und/oder eine Minimierung von Unterschreitungen von vordefinierten Mindestsicherheitsabständen zu anderen Verkehrsteilnehmern vor,
neben und/oder hinter dem Kraftfahrzeug (60); und
a2) einen veränderlichen Pegel (22, 32, 42, 52), das heißt Grad der Zielerfüllung der Zielgrößen (20, 30, 40, 50), aufweisen;
b) Erfassen einer Umgebung des Kraftfahrzeugs (60), wobei das Erfassen der Umgebung des Kraftfahrzeugs (60) ein Erfassen eines anderen Verkehrsteilnehmers aufweist;
c) Erzeugen eines Fahrverhaltens des Kraftfahrzeugs (60) in Abhängigkeit von der erfassten Umgebung des Kraftfahrzeugs (60), von dem erfassten anderen Verkehrsteilnehmer und den Pegeln (22, 32, 42, 52) der Zielgrößen (20, 30, 40, 50), wobei das Erzeugen des Fahrverhaltens aufweist:
c1) Bestimmen einer Mehrzahl von Fahrmanöveralternativen in Abhängigkeit der erfassten Umgebung des Kraftfahrzeugs (60);
c2) Bestimmen einer Pegelveränderung für mindestens eine Zielgröße (20, 30, 40, 50) für jede Fahrmanöveralternative;
c3) Auswählen einer der Fahrmanöveralternativen in Abhängigkeit von den Pegeln (22, 32, 42, 52) der Zielgrößen (20, 30, 40, 50), wobei diejenige Fahrmanöveralternative ausgewählt wird, bei der die bestimmte Pegelveränderung den Pegel (22, 32, 42, 52) der Zielgröße (20, 30, 40, 50) innerhalb eines vorgegebenen Pegelbereichs hält, zu keiner Unterschreitung eines unteren Pegelschwellwerts (26, 36, 46, 56) führt oder zu keiner Überschreitung eines oberen Pegelschwellwerts (24, 34, 44, 54) führt; und
c4) Durchführen der ausgewählten Fahrmanöveralternative;
wobei das Verfahren ferner aufweist:
d) Anpassen der Pegel (22, 32, 42, 52) der Zielgrößen (20, 30, 40, 50) in Abhängigkeit vom erzeugten Fahrverhalten des Kraftfahrzeugs (60), wobei das Anpassen der Pegel (22, 32, 42, 52) der Zielgrößen (20, 30, 40, 50) ein Anpassen des Pegels (22, 32, 42, 52) mit der bestimmten Pegelveränderung für die ausgewählte und durchgeführte Fahrmanöveralternative aufweist.

2. Verfahren nach Anspruch 1, wobei das Erfassen der Umgebung des Kraftfahrzeugs (60) aufweist:
Erfassen eines anderen Kraftfahrzeugs (70),
wobei der Schritt des Erzeugens des Fahrverhaltens des Kraftfahrzeugs (60) zusätzlich von dem erfassten anderen Verkehrsteilnehmer, nämlich einer Trajektorieprognose (T2) des anderen Verkehrsteilnehmers, abhängt.

3. Verfahren nach Anspruch 2, ferner aufweisend:
Bestimmen der Trajektorieprognose (T2) des anderen Verkehrsteilnehmers basierend auf einer erfassten Bewegung des anderen Verkehrsteilnehmers, erfassten Lichtsignalen des anderen Verkehrsteilnehmers und/oder eines erfassten bevorstehenden Fahrbahnverlaufs.

4. Verfahren nach einem der vorherigen Ansprüche, wobei die Zielgrößen (20, 30, 40, 50) weiterhin aufweisen:
eine Minimierung von Geschwindigkeitsänderungen.

5. Verfahren nach einem der vorherigen Ansprüche, wobei die Zielgröße (20, 30, 40, 50) miteinander konkurrierende Zielgrößen (20, 30, 40, 50) aufweisen.

6. Verfahren nach einem der vorherigen Ansprüche, wobei das Erzeugen des Fahrverhaltens des Kraftfahrzeugs (60) zum Halten der Pegel (22, 32, 42, 52) der Zielgrößen (20, 30, 40, 50) innerhalb von vorgegebenen Pegelbereichen der Zielgrößen (20, 30, 40, 50) durchgeführt wird.

7. Verfahren nach einem der vorherigen Ansprüche, wobei:
mindestens eine Zielgröße (20, 30, 40, 50) einen unteren Pegelschwellwert (26, 36, 46, 56) aufweist und das Erzeugen des Fahrverhaltens des Kraftfahrzeugs (60) zum Halten der Pegel (22, 32, 42, 52) der Zielgrößen (20, 30, 40, 50) über dem unteren Pegelschwellwert (26, 36, 46, 56) und/oder zum Erhöhen der Pegel (22, 32, 42, 52) über den unteren Pegelschwellwert (26, 36, 46, 56) durchgeführt wird, und/oder
mindestens eine Zielgröße (20, 30, 40, 50) einen oberen Pegelschwellwert (24, 34, 44, 54) aufweist und das Erzeugen des Fahrverhaltens des Kraftfahrzeugs (60) zum Halten der Pegel (22, 32, 42, 52) der Zielgrößen (20, 30, 40, 50) unter dem oberen Pegelschwellwert (24, 34, 44, 54) und/oder zum Verringern der Pegel (22, 32, 42, 52) unter den oberen Pegelschwellwert (24, 34, 44, 54) durchgeführt wird.

8. Verfahren nach einem der vorherigen Ansprüche, wobei:
die Zielgrößen (20, 30, 40, 50), der vorgegebene Pegelbereich, der untere Pegelschwellwert (26, 36, 46, 56), der obere Pegelschwellwert (24, 34, 44, 54), und/oder ein Ausmaß einer Veränderung eines Pegels (22, 32, 42, 52) in Abhängigkeit von einer Benutzereingabe insbesondere über einer Benutzerschnittstelle (14) des Kraftfahrzeugs (60) einstellbar sind; und/oder
eine Priorisierung der Zielgrößen (20, 30, 40, 50) von einem Benutzer insbesondere über einer Benutzerschnittstelle (14) des Kraftfahrzeugs (60) einstellbar ist.

9. Verfahren nach einem der vorherigen Ansprüche, wobei die Fahrmanöveralternativen aufweisen:
Kolonnefahren mit oder Überholen eines vorausfahrenden anderen Kraftfahrzeugs (70); und/oder
Einfädeln eines anderen Kraftfahrzeugs (70) vor oder hinter dem Kraftfahrzeug (60).

10. Verfahren nach einem der vorherigen Ansprüche, wobei:
die Pegel (22, 32, 42, 52) der Zielgrößen (20, 30, 40, 50) fortwährend über eine Mehrzahl von Fahrmanövern des Kraftfahrzeugs (60) angepasst werden.

11. Verfahren nach einem der vorherigen Ansprüche, wobei das Erzeugen des Fahrverhaltens von einer Sicherheitseinrichtung (18) in kritischen Fahrsituationen zur Kollisionsvermeidung und/oder zur Einhaltung von Straßenverkehrsregeln jederzeit übersteuerbar ist.

12. Kraftfahrzeug (60), vorzugsweise Nutzfahrzeug, aufweisend:
eine Umgebungserfassungssensorik (16) zur Erfassung einer Umgebung des Kraftfahrzeugs (60); und
eine Steuereinrichtung (12), die zum automatisierten, vorzugsweise autonomen, Fahren des Kraftfahrzeugs (60) und zum Durchführen eines Verfahrens gemäß einem der vorherigen Ansprüche ausgebildet ist.

## Claims

1. A method for automated, in particular autonomous, driving of a motor vehicle (60), preferably a commercial vehicle, comprising
a) providing one or more target quantities (20, 30, 40, 50) for influencing a driving behaviour of the motor vehicle (60), wherein the target quantities (20, 30, 40, 50) comprise:
a1) a minimising of acceleration processes in the longitudinal and/or transverse direction of the motor vehicle (60), a minimising of lane changes, a minimising of braking processes and/or a minimising of undercutting of predefined minimum safety distances to other road users in front of, next to and/or behind the motor vehicle (60); and
a2) a variable level (22, 32, 42, 52), i.e. degree of target fulfilment of the target quantities (20, 30, 40, 50);
b) detecting an environment of the motor vehicle (60), wherein the detecting of the environment of the motor vehicle (60) comprises a detecting of another road user;
c) generating a driving behaviour of the motor vehicle (60) as a function of the detected environment of the motor vehicle (60), of the detected other road user and of the levels (22, 32, 42, 52) of the target quantities (20, 30, 40, 50), wherein the generating of the driving behaviour comprises
c1) determining a plurality of driving manoeuvre alternatives as a function of the detected environment of the motor vehicle (60);
c2) determining a level change for at least one target quantity (20, 30, 40, 50) for each driving manoeuvre alternative;
c3) selecting one of the driving manoeuvre alternatives as a function of the levels (22, 32, 42, 52) of the target quantities (20, 30, 40, 50), wherein the driving manoeuvre alternative is selected for which the determined level change exceeds the level (22, 32, 42, 52) of the target quantity (20, 30, 40, 50), 52) of the target quantity (20, 30, 40, 50) is kept within a predetermined level range, does not lead to the level falling below a lower level threshold value (26, 36, 46, 56) or does not lead to the level exceeding an upper level threshold value (24, 34, 44, 54); and
c4) performing the selected alternative driving manoeuvre;
wherein the method further comprises:
d) adjusting the levels (22, 32, 42, 52) of the target quantities (20, 30, 40, 50) depending on the generated driving behaviour of the motor vehicle (60), wherein the adjusting of the levels (22, 32, 42, 52) of the target quantities (20, 30, 40, 50) comprises adjusting the level (22, 32, 42, 52) with the determined level change for the selected and performed driving manoeuvre alternative.

2. The method according to claim 1, wherein the detecting comprises detecting the surroundings of the motor vehicle (60):
detecting another motor vehicle (70),
wherein the step of generating the driving behaviour of the motor vehicle (60) additionally depends on the detected other road user, namely a trajectory profile (T2) of the other road user.

3. The method according to claim 2, further comprising:
determining the trajectory prediction (T2) of the other road user based on a detected movement of the other road user, detected light signals of the other road user and/or a detected upcoming trajectory.

4. The method according to one of the previous claims, wherein the target quantities (20, 30, 40, 50) further comprise:
a minimising of changes in velocity.

5. The method according to one of the previous claims, wherein the target quantity (20, 30, 40, 50) comprise competing target quantities (20, 30, 40, 50).

6. The method according to one of the previous claims, wherein generating the driving behaviour of the motor vehicle (60) is performed to maintain the levels (22, 32, 42, 52) of the target quantities (20, 30, 40, 50) within predetermined level ranges of the target quantities (20, 30, 40, 50).

7. The method according to one of the previous claims, wherein:
at least one target quantity (20, 30, 40, 50) comprises a lower level threshold value (26, 36, 46, 56) and the generating of the driving behaviour of the motor vehicle (60) is performed for maintaining the levels (22, 32, 42, 52) of the target quantities (20, 30, 40, 50) above the lower level threshold value (26, 36, 46, 56) and/or for increasing the levels (22, 32, 42, 52) above the lower level threshold value (26, 36, 46, 56), and/or
at least one target quantity (20, 30, 40, 50) comprises an upper level threshold value (24, 34, 44, 54) and the generation of the driving behaviour of the motor vehicle (60) is carried out to maintain the levels (22, 32, 42, 52) of the target quantities (20, 30, 40, 50) below the upper level threshold value (24, 34, 44, 54) and/or to reduce the levels (22, 32, 42, 52) below the upper level threshold value (24, 34, 44, 54).

8. The method according to one of the previous claims, wherein:
the target quantities (20, 30, 40, 50), the predetermined level range, the lower level threshold value (26, 36, 46, 56), the upper level threshold value (24, 34, 44, 54), and/or an extent of a change in a level (22, 32, 42, 52) can be set as a function of a user input, in particular via a user interface (14) of the motor vehicle (60), and/or
a prioritizing of the target quantities (20, 30, 40, 50) can be set by a user, in particular via a user interface (14) of the motor vehicle (60).

9. The method according to one of the previous claims, wherein the driving manoeuvre alternatives comprise:
travelling in a column with or overtaking another motor vehicle (70) travelling in front; and/or
threading in another motor vehicle (70) in front of or behind the motor vehicle (60).

10. The method according to one of the previous claims, wherein:
the levels (22, 32, 42, 52) of the target quantities (20, 30, 40, 50) are continuously adjusted over a plurality of driving manoeuvres of the motor vehicle (60).

11. The method according to one of the previous claims, wherein the generating of the driving behaviour can be overridden at any time by a safety device (18) in critical driving situations for collision avoidance and/or for compliance with road traffic regulations.

12. A motor vehicle (60), preferably a commercial vehicle, comprising
an environment detection sensor system (16) for detecting an environment of the motor vehicle (60); and
a control device (12) which is configured for automated, preferably autonomous, driving of the motor vehicle (60) and for carrying out a method according to one of the preceding claims.

## Revendications

1. Procédé de conduite automatisée, notamment autonome, d'un véhicule automobile (60), de préférence d'un véhicule utilitaire, ledit procédé comprenant les étapes suivantes :
a) fournir une ou plusieurs grandeurs cibles (20, 30, 40, 50) destinées à influer sur le comportement de conduite du véhicule automobile (60), les grandeurs cibles (20, 30, 40, 50) comprenant :
a1) une minimisation de processus d'accélération dans les directions longitudinale et/ou transversale du véhicule automobile (60), une minimisation de changements de voie, une minimisation de processus de freinage et/ou une minimisation de franchissement vers le bas de distances de sécurité minimales prédéfinies par rapport à d'autres usagers de la route à l'avant, à côté et/ou à l'arrière du véhicule automobile (60) ; et
a2) un niveau variable (22, 32, 42, 52), c'est-à-dire un degré de ciblage des grandeurs cibles (20, 30, 40, 50) ;
b) détecter un environnement du véhicule automobile (60), la détection de l'environnement du véhicule automobile (60) comportant la détection d'un autre usager de la route ;
c) générer un comportement de conduite du véhicule automobile (60) en fonction de l'environnement détecté du véhicule automobile (60), de l'autre usager de la route détecté et des niveaux (22, 32, 42, 52) des grandeurs cibles (20, 30, 40, 50), la génération du comportement de conduite comportant les étapes suivantes :
c1) déterminer une pluralité d'alternatives de manoeuvre de conduite en fonction de l'environnement détecté du véhicule automobile (60) ;
c2) déterminer un changement de niveau pour au moins une grandeur cible (20, 30, 40, 50) pour chaque alternative de manoeuvre de conduite ;
c3) sélectionner l'une des alternatives de manoeuvre de conduite en fonction des niveaux (22, 32, 42, 52) des grandeurs cibles (20, 30, 40, 50), l'alternative de manoeuvre de conduite sélectionnée étant celle pour laquelle le changement de niveau déterminé maintient le niveau (22, 32, 42, 52) de la grandeur cible (20, 30, 40, 50) dans une plage de niveaux spécifiée, n'entraîne pas de franchissement vers le bas d'une valeur de niveau seuil inférieure (26, 36, 46, 56) ou n'entraîne pas de franchissement vers le haut d'une valeur de niveau seuil supérieure (24, 34, 44, 54) ; et
c4) mettre en oeuvre l'alternative de manoeuvre de conduite sélectionnée ;
le procédé comprenant en outre les étapes suivantes :
d) adapter les niveaux (22, 32, 42, 52) des grandeurs cibles (20, 30, 40, 50) en fonction du comportement de conduite du véhicule automobile (60), l'adaptation des niveaux (22, 32, 42, 52) des grandeurs cibles (20, 30, 40, 50) comportant l'adaptation du niveau (22, 32, 42, 52) au changement de niveau déterminé pour les alternatives de manoeuvre de conduite sélectionnées et mises en oeuvre.

2. Procédé selon la revendication 1, la détection de l'environnement du véhicule automobile (60) comprenant les étapes suivantes :
détection d'un autre véhicule automobile (70),
l'étape de génération du comportement de conduite du véhicule automobile (60) dépendant en outre de l'autre usager de la route détecté, à savoir d'une prévision de trajectoire (T2) de l'autre usager de la route.

3. Procédé selon la revendication 2, comportant en outre l'étape suivante :
déterminer la prévision de trajectoire (T2) de l'autre usager de la route sur la base d'un mouvement détecté de l'autre usager de la route, de signaux lumineux détectés de l'autre usager de la route et/ou d'un tracé de chaussée à venir détecté.

4. Procédé selon l'une des revendications précédentes, les grandeurs cibles (20, 30, 40, 50) comportant en outre l'étape suivante :
minimiser les changements de vitesse.

5. Procédé selon l'une des revendications précédentes, la grandeur cible (20, 30, 40, 50) comportant des grandeurs cibles concurrentes (20, 30, 40, 50) .

6. Procédé selon l'une des revendications précédentes, la génération du comportement de conduite du véhicule automobile (60) étant réalisée afin de maintenir les niveaux (22, 32, 42, 52) des grandeurs cibles (20, 30, 40, 50) dans des plages de niveaux spécifiés des grandeurs cibles (20, 30, 40, 50).

7. Procédé selon l'une des revendications précédentes :
au moins une grandeur cible (20, 30, 40, 50) présentant une valeur de niveau seuil inférieure (26, 36, 46, 56) et la génération du comportement de conduite du véhicule automobile (60) étant réalisée afin de maintenir les niveaux (22, 32, 42, 52) des grandeurs cibles (20, 30, 40, 50) au-dessus de la valeur de niveau seuil inférieure (26, 36, 46, 56) et/ou afin d'augmenter les niveaux (22, 32, 42, 52) au-dessus de la valeur de niveau seuil inférieure (26, 36, 46, 56), et/ou
au moins une grandeur cible (20, 30, 40, 50) présentant une valeur de niveau seuil supérieure (24, 34, 44, 54) et la génération du comportement de conduite du véhicule automobile (60) étant réalisée afin de maintenir les niveaux (22, 32, 42, 52) des grandeurs cibles (20, 30, 40, 50) au-dessous de la valeur de niveau seuil supérieure (24, 34, 44, 54) et/ou afin de réduire les niveaux (22, 32, 42, 52) au-dessous de la valeur de niveau seuil supérieure (24, 34, 44, 54).

8. Procédé selon l'une des revendications précédentes :
les grandeurs cibles (20, 30, 40, 50), la plage de niveau spécifié, la valeur de niveau seuil inférieure (26, 36, 46, 56), la valeur de niveau seuil supérieure (24, 34, 44, 54), et/ou une étendue d'un changement d'un niveau (22, 32, 42, 52) pouvant être réglés en fonction d'une entrée d'utilisateur, notamment par le biais d'une interface utilisateur (14) du véhicule automobile (60) ; et/ou
une priorisation des grandeurs cibles (20, 30, 40, 50) pouvant être réglée par un utilisateur, notamment par le biais d'une interface utilisateur (14) du véhicule automobile (60).

9. Procédé selon l'une des revendications précédentes, les alternatives de manoeuvre de conduite comportant les étapes suivantes :
conduire en colonne avec un autre véhicule automobile précédent (70) ou dépasser celui-ci ; et/ou
rabattre un autre véhicule automobile (70) à l'avant ou à l'arrière du véhicule automobile (60).

10. Procédé selon l'une des revendications précédentes :
les niveaux (22, 32, 42, 52) des grandeurs cibles (20, 30, 40, 50) étant adaptés en continu sur une pluralité de manoeuvres de conduite du véhicule automobile (60).

11. Procédé selon l'une des revendications précédentes, la génération du comportement de conduite pouvant être annulée par un dispositif de sécurité (18) à tout moment dans des situations de conduite critiques afin d'éviter des collisions et/ou de respecter des règles de la circulation routière.

12. Véhicule automobile (60), de préférence véhicule utilitaire, comprenant :
un système de capteur de détection d'environnement (16) destiné à détecter un environnement du véhicule automobile (60) ; et
un dispositif de commande (12) qui est conçu pour la conduite automatisée, de préférence autonome, du véhicule automobile (60) et pour la mise en oeuvre d'un procédé selon l'une des revendications précédentes.
